# EUROPEAN PATENT SPECIFICATION

(11) **EP 3 384 266 B1**
(45) Date of publication and mention of the grant of the patent: **16.06.2021**
(21) Application number: 17709819.1
(22) Date of filing: 10.02.2017
(51) Int. Cl.: G01M 17/007

(54) **AN AUTOMOTIVE TESTING SYSTEM, METHOD AND COMPUTER PROGRAM PRODUCT**
AUTOMOBILPRÜFSYSTEM, VERFAHREN UND COMPUTERPROGRAMMPRODUKT
SYSTÈME DE TEST D'AUTOMOBILES, PROCÉDÉ ET PRODUIT DE PROGRAMME INFORMATIQUE

(30) Priority: 10.02.2016 EP 16155078
(43) Date of publication of application: 10.10.2018
(73) Proprietor: TASS International Software and Services B.V., 2289 CC Rijswijk (NL)
(72) Inventor: TIDEMAN, Martijn, 2289 CC Rijswijk (NL); WANTENAAR, Martinus Franciscus Hendricus, 5298 TG Liempde (NL)
(74) Representative: Maier, Daniel Oliver
(86) International application number: PCT/NL2017/050083
(87) International publication number: WO 2017/138815

(56) References cited:
- JP-A- H11 260 685
- US-A- 5 986 545

## Description

The invention relates to an automotive testing system, comprising a data processing unit provided with a data input port for receiving sensor input data and a data output port for transmitting processed data, further comprising a data acquisition unit forwarding sensor input data to said data processing unit, the data acquisition unit including a sensor unit having a sensor system and an electronic system for capturing sensor data.

Automotive testing systems are known for the purpose of testing data acquisition units and data processing units processing sensor input data generated by said data acquisition units, thereby reducing expensive testing equipment and testing time in realistic traffic circumstances. Data acquisition units can be provided with a camera unit having an optic system and an electronic system for capturing image data.

When testing camera units, e.g. used for dedicated automotive functionality such as variable cruise control, collision avoiding systems, pedestrian detection etc, an optic image is generated on a display to be captured by the camera unit. On the display, various traffic situations including road traffic and weather circumstances are shown to test the functionality of the camera unit and the data processing unit processing the image data captured by the camera unit.

It is an object of the invention to provide an automotive testing system according to the preamble that enables testing even more realistic circumstances. Thereto, according to the invention, the automotive testing system further comprises a synthetic sensor data generator transmitting synthetic sensor data to the electronic system of the sensor unit.

By using a synthetic sensor data generator instead of a display, the optic system of the camera unit is functionally simulated so that testing data can be represented more realistically to the electronic system of the camera unit. On the one hand, side effects introduced in the optical path of the testing system can be avoided, while, on the other hand, real life optic phenomena that are not visible on a display might now be included in the synthetic sensor data mimicking the optical steps performed in the camera unit.

The document US 5,986,545 - Sanada et al. "Vehicle driveability evaluation system" discloses a system for generating driveability signal for a setup in which a real car engine is embedded in a driving simulator. Sensor data of the engine is processed with simulation of external conditions and vehicle dynamics. The output is used to control an artificial load (dynamic dynamometer) for the engine and for synthesizing images and physical feedback such as acceleration for the driver.

The invention is at least partly based on the insight that a display inherently is limited in representing realistic optic circumstances thereby also limiting the performance and/or reliability of the automotive testing system. Further, display features are subjected to bias so that test results of the system are vulnerable to reproducibility issues. According to an aspect of the invention, such disadvantageous effects are circumvented by generating synthetic sensor data replacing the real image data as well as by transmitting these synthetic sensor data to the electronic system of the sensor unit rather than projecting these to the sensor unit via a display.

It is noted that, within the context of the application, the expression "synthetic sensor data" is tobe understood as data that has been generated electronically by simulating data that is normally generated by the respective sensor system.

The automotive testing system of the invention is defined by claim 1, the automotive testing method by claim 10 and the computer program product for automotive testing by claim 18.

A computer program product may comprise a set of computer executable instructions stored on a data carrier, such as a flash memory, a CD or a DVD. The set of computer executable instructions, which allow a programmable computer to carry out the method as defined above, may also be available for downloading from a remote server, for example via the Internet, e.g. as an app.

Other advantageous options and embodiments according to the invention are described in the following claims.

By way of example only, embodiments of the present invention will now be described with reference to the accompanying figures in which
Fig. 1 shows a schematic view of an automotive testing system according to the invention;
Fig. 2 shows a flow chart of a first embodiment of a method according to the invention, and
Fig. 3 shows a flow chart of a second embodiment of a method according to the invention.

The figures merely illustrate preferred embodiments according to the invention. In the figures, the same reference numbers refer to equal or corresponding parts.

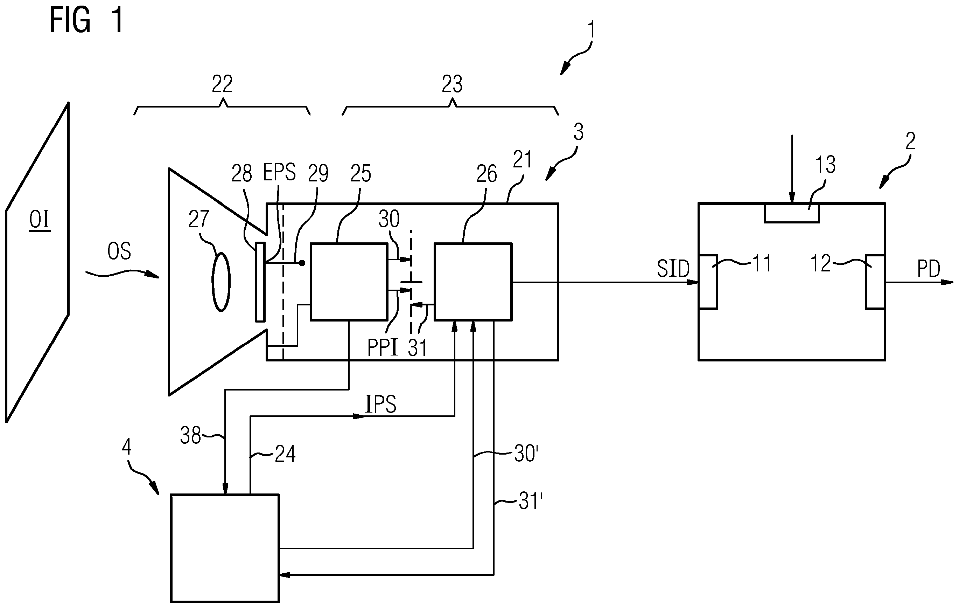

Figure 1 shows a schematic view of an automotive testing system 1 according to the invention. The system comprises a data processing unit 2, a data acquisition unit 3 and a synthetic sensor data generator 4.

The data processing unit 2 is provided with a data input port 11 for receiving sensor input data and a data output port 12 for transmitting processed data PD, e.g. for the purpose of feeding a control unit for generating control data based on the processed data transmitted by the processing unit 2. In the shown embodiment, the processing unit 2 further comprises an additional data input port 13, e.g. for receiving further input data, e.g. radar data.

The data acquisition unit 3 is arranged for forwarding sensor input data to said data processing unit 2, via the data input port 11 of the data processing unit 2. The data acquisition unit 3 includes a sensor unit 21 having a sensor system 22 and an electronic system 23 for capturing sensor data. In the shown embodiment, the sensor unit 21 is implemented as a camera unit, wherein the sensor system 22 is an optic system and wherein the sensor data are image data.

Further, the synthetic sensor data generator 4 of the automotive testing system 1 is arranged for generating and transmitting synthetic sensor data also referred to as electronic image pixel signals IPS to the electronic system 23 of the camera unit 21. In the shown embodiment, the image simulating generator 4 is connected to the electronic system 23 of the camera unit 21 via a wired transmission channel 24. In principle, the image pixel signals IPS can be transmitted in another way, e.g. via a wireless transmission channel.

In the shown embodiment, the electronic system 23 of the camera unit 21 includes two modules, e.g. a pre-processing module 25 and a digital signal processing unit DSP 26 arranged in series such that the preprocessing module 25 processes raw image data converting them into preprocessed image data PPI while the digital signal processing unit DSP 26 performs further processing on the pre-processed data PPI and then transmits the processed data as sensor input data SID to the data input port 11 of the data processing unit 2. As an example, the pre-processing module 25 might be arranged for removing noise from image data while the digital signal processing unit may be arranged for identifying object information from the image data. Further, the pre-processing module 25 transmits status information 30 of the pre-processing module 25 and the optic system 22 towards the digital signal processing unit DSP 26, as metadata.

The optic system 22 of the camera unit 21 typically includes a lens configuration 27 and an image optic sensor 28. Further, the optic system 22 may include other components as well such as a shutter. The image optic sensor 28 can be implemented as a CCD or CMOS sensor converting an optic signals OS received from an optic image OI into electronic pixel signals EPS representing the optic image OI as electronic signals. The image optic sensor 28 may at least partially be integrated with the pre-processing module 25.

In known camera units 21, the image optic sensor 28 is connected to the electronic system 23 via a sensor data channel 29 to transmit the electronic pixel signals EPS converted from the optic signals OS towards the electronic system 23 for processing. Then, an optic image OI is captured by converting optic signals OS into electronic pixel signals EPS and processing said electronic pixel signals EPS by the electronic system 23. In known camera units 21, the pre-processing module 25 transmits pre-processed data PPI and status information 30 towards the digital signal processing unit DSP 26. Then, the digital signal processing unit DSP 26 forwards sensor input data SID to the data input port 11 data processing unit 2 and image enhancements requests and/or commands 31 back to the pre-processing module 25.

During operation of a known automotive testing system, an image generator is provided generating an optic image OI on a display arranged before the camera unit 21. The image generator typically generates a sequence of images forming a video showing realistic traffic situations to simulate common real life traffic circumstances for testing the performance of the camera unit 21 and further systems such as the data processing unit 2 of the automotive testing system 1.

According to an aspect of the invention, the electronic system 23 of the camera unit 21 receives synthetic sensor data also referred to as electronic image pixel signals IPS generated by the synthetic sensor data generator 4 of the automotive testing system 1, thus simulating image data that usually is captured by the camera system using the optic system 22. The electronic pixel signals EPS provided by the image optic sensor 28 no longer forms a basis for the sensor input data SID that is transmitted from the digital signal processor DSP 26 to the data input port 11 of the data processing unit 2. In the shown embodiment, the pre-processing module 25 transmits neither pre-processed data PPI nor status information 30 towards the digital signal processing unit DSP 26. Said transmission can be stopped e.g. by physically disconnecting respective transmission channels or by functionally terminating said transmission actions, using software. Further, the transmission of pre-processed data PPI and/or status information 30 towards the digital signal processing unit DSP 26 can also be disabled in another way e.g. by deactivating the image optic sensor 28 and/or by removing disabling the sensor data channel 29.

Then, an optic image is captured by generating synthetic image sensor data or electronic image pixel signals IPS simulating in the electronic domain the functionality of the optic system 22 of the camera unit 21 including propagation of the optic signal OS through the lens system 27 and conversion into electronic pixel signals EPS using the image optic sensor 28. Then, image data captured by the camera unit 21 are based on the electronic image pixel or data signals transmitted to the electronic system 23 of the camera unit 21.

By bypassing the optic system 22 of the camera unit 21 the optic part of the testing environment is effectively simulated thus removing artefacts that might be introduced in said optic part during testing but are not present in real life circumstances. As an example, artefacts might be generated when generating the optic image OI using RGB light generating elements. On the other hand, real life optic phenomena that are not visible in the generated optic image OI, such as infrared interaction, might now be included in the image pixel signals IPS mimicking the optical steps performed in the camera unit 21. Further, the synthetic image data or electronic image pixel data may include RGB sensor data and/or other visible or invisible spectrum data such as image data associated with an optical wavelength in a specific visible or invisible spectrum band.

When applying an automotive testing system 1 according to the invention, a step of generating the optic image OI has become superfluous.

In a particular embodiment, the image optic sensor 28 may even be removed from the camera unit 21. However, other functionality of the camera unit 21 remains in operation, e.g. including controlling operations of the lens system and/or shutter operation. In the shown embodiment, status information of the pre-processing module 25 and/or optic system 22 e.g. regarding the lens system 27 and other optic components is forwarded to the synthetic sensor data generator 4, as status information 38, so that the image pixel signals IPS may take into account optic propagation behavior of the simulated optic signal OS in the optic system 22 and other processing effects in the pre-processing module 25.

The synthetic sensor data or electronic image pixel signals IPS might represent pixel data that has already been processed in a preprocessing module 25 of the electronic system 23. Then, the image pixel signals IPS is transmitted to the digital signal processing unit DSP 26 of the camera unit 21. In the shown embodiment, the data transmission channel 24 interconnects the synthetic sensor data generator 4 and the digital signal processing unit DSP 26 so that the image pixel signals IPS is transmitted to said digital signal processing unit DSP 26. Then, the usual electronic interaction between the pre-processing module 25 and the digital signal processing unit DSP 26 is interrupted. There is no transmission of pre-processed data PPI and status information 30 towards the digital signal processing unit DSP 26 anymore, and no transmission of image enhancements requests and/or commands 31 from the digital signal processing unit DSP 26 back to the pre-processing module 25. Then, the digital signal processing unit DSP 26 receives image pixel signals IPS and synthetic status information 30' of the pre-processing module 25, both from the synthetic sensor data generator 4. Both the image data and status data usually transmitted by the pre-processing module 25 is now simulated by the synthetic sensor data generator 4. Also, the digital signal processing unit DSP 26 now transmits the image enhancements requests and/or commands 31' to the synthetic sensor data generator 4, so that said generator 4 may include such information when generating the synthetic image and status data. The image enhancements request and/or commands can be used when generating the synthetic image data.

It is noted that, alternatively, the image pixel signals IPS might be transmitted to the electronic system 23 in another format, e.g. as raw pixel data that is usually generated by the image optic sensor 28. Then, the image pixel signals IPS may be transmitted to the pre-processing module 25 or to another module of the electronic system 23 of the camera unit 21.

It is noted that not only image sensor data can be simulated using synthetic sensor data. In other embodiments according to the invention, the sensor unit is implemented as a unit receiving other sensor signals such as laser signals, infrared signals, radar signals, acoustic signals, ultrasonic signals, pressure signals or electronic signals received in a wired or wireless way and representing any type of measured physical signals associated with automotive conditions or parameters. The signals may relate to automotive conditions or parameters of a vehicle in which the sensor unit is mounted or automotive conditions or parameters of other vehicles forwarding such signals to the sensor unit. It is further noted that the automotive testing system may include a multiple number of acquisition units wherein sensor data is simulated using synthetic sensor data. By providing synthetic sensor data to the electronic system of the respective sensor unit, a process of generating sensor data in the sensor unit can be simulated in the electronic domain in a manner that is more realistic than simulating the parameter to be sensed in the parameter domain, i.e. in the visual, electromagnetic, acoustic, ultra-acoustic or other physical domain.

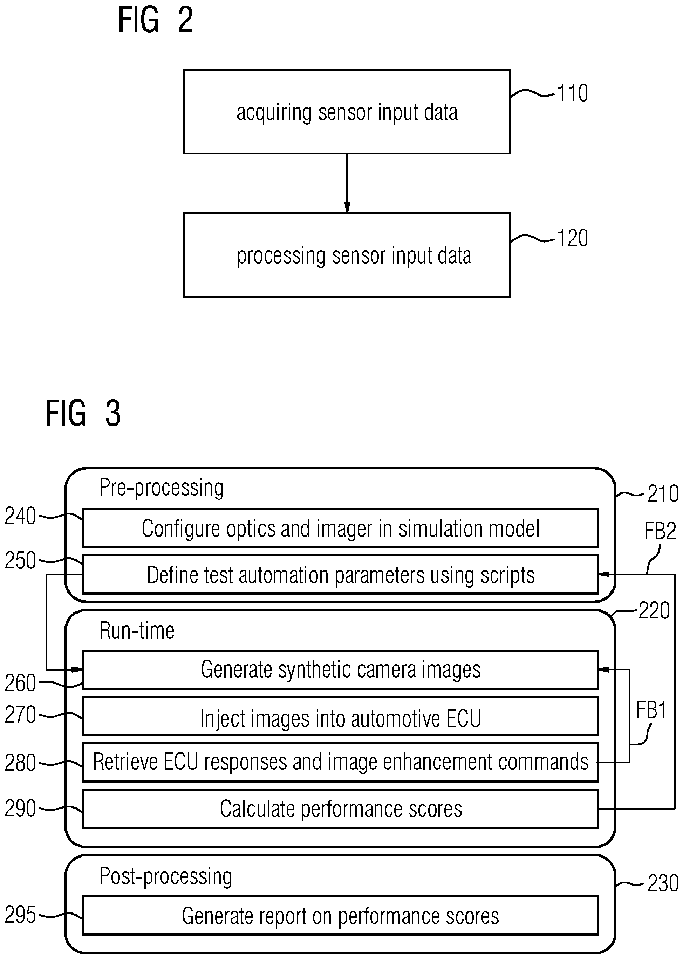

Figure 2 shows a flow chart of an embodiment of a method according to the invention. The method is used for automotive testing, and comprises a step of acquiring 110 sensor input data, and a step of processing 120 said sensor input data, wherein the step of acquiring 110 sensor input data includes capturing sensor data using a sensor unit having a sensor system and an electronic system, and wherein the step of acquiring 110 sensor input data further includes transmitting synthetic sensor data from a synthetic sensor data generator to the electronic system of the sensor unit.

The method of automotive testing can be facilitated using dedicated hardware structures, such as computer servers. Otherwise, the method can also at least partially be performed using a computer program product comprising instructions for causing a processor of a computer system to facilitate automotive testing. All (sub)steps can in principle be performed on a single processor. However, it is noted that at least one step can be performed on a separate processor. A processor can be loaded with a specific software module. Dedicated software modules can be provided, e.g. from the Internet.

Fig. 3 shows a flow chart of a second embodiment of a method according to the invention. Here, the method includes three modules, e.g. a pre-processing module 210, a run-time module 220 and a post-processing module 230. The pre-processing module 210 includes a step of configuring 240 optics and imager in a simulation model to create a simulation environment. Further, the pre-processing module 210 includes a step of defining 250 test automation parameters using scrips in order to define test cases for testing the data acquisition unit. The run-time module 220 includes four steps, viz. a step of generating 260 synthetic camera images using the synthetic sensor data generator, a step of injecting 270 images into an automotive ECU, e.g. by transmitting the synthetic sensor data to the digital signal processing unit DSP being a unit of the electronic system of the sensor unit, a step of retrieving 280 ECU response and image enhancement commands, e.g. by receiving image enhancements requests and/or commands transmitted from the digital signal processing unit DSP from the sensor unit to the synthetic sensor data generator, and a step of calculating 290 performance scores, e.g. by evaluating processed data PD that is output by the data processing unit 2. Further, the post-processing module 230 includes a step of generating 295 a report on performance scores obtained from the calculated performance scores.

The run-time module 220 includes a first feedback loop FB1 so that a sequence of the generating step 260, the injecting step 270 and the retrieving step 280 is repeatedly performed simulating the test cases defined in the defining step 250 of the pre-processing module 210. Further, a second feedback loop FB2 is provided such the defining step 250 is repeated after calculating 290 the performance scores to facilitate additional testing experiments based on test results. It is noted that various alternative embodiments can be implemented, e.g. by including further feedback loops and/or by integrating test results of other test equipment.

It is noted that the electronic system 23 of the sensor unit 21 may include more or less units for processing sensor data. As an example, the sensor unit 21 may be implemented without a digital signal processing unit DSP 26 or with an additional processing unit for processing intermediate sensor data.

## Claims

1. An automotive testing system (1), comprising a data processing unit (2) provided with a data input port (11) for receiving sensor input data and a data output port (12) for transmitting processed data, further comprising a data acquisition unit (3) forwarding sensor input data to said data processing unit, the data acquisition unit including a sensor unit (21) having a sensor system (22) and an electronic system (23) for capturing sensor data, **characterised in that** the automotive testing system further comprises a synthetic sensor data generator (4) transmitting synthetic sensor data to the electronic system of the sensor unit, further comprising a data transmission channel (24) interconnecting the synthetic sensor data generator and the electronic system of the sensor unit, wherein the electronic system of the sensor unit comprises a digital signal processing unit (26), wherein the testing system is arranged for repeatedly performing a sequence of steps using a first feedback loop, the steps of the sequence including the steps of:
- generating the synthetic sensor data,
- transmitting the synthetic sensor data to a digital signal processing unit, and
- receiving image enhancements request and/or commands from the digital signal processing unit.

2. An automotive testing system according to claim 1, wherein the sensor input data forwarded by the sensor unit are based on the synthetic sensor data transmitted to the electronic system of the sensor unit.

3. An automotive testing system according to any of the preceding claims,
wherein the data transmission channel is arranged for transmitting the synthetic sensor data to the digital signal processing unit.

4. An automotive testing system according to any of the preceding claims,
wherein the electronic system of the sensor unit comprises a pre-processing unit (25) for pre-processing raw sensor data generated by the sensor system.

5. An automotive testing system according to any of the preceding claims,
wherein the sensor unit is a camera unit,
wherein the sensor system is an optic system, and
wherein the sensor data are image data.

6. An automotive testing system according to claim 6,
wherein the synthetic sensor data include RGB sensor data and/or other visible or invisible spectrum data.

7. An automotive testing system according to any of the preceding claims,
wherein the synthetic sensor data include simulated infrared signals.

8. An automotive testing system according to any of the preceding claims,
wherein the synthetic sensor data include simulated laser signals, simulated infrared signals, simulated radar signals, simulated acoustic signals, simulated ultrasonic signals, simulated pressure signals and/or simulated electronic signals received in a wired or wireless way and representing any type of measured physical signals associated with automotive conditions or parameters.

9. An automotive testing system according to any of the preceding claims,
further comprising a control unit for generating control data based on the processed data transmitted by the processing unit.

10. An automotive testing method, comprising the steps of:
- acquiring sensor input data, and
- processing said sensor input data,
wherein the step of acquiring sensor input data includes capturing sensor data using a sensor unit having a sensor system and an electronic system, **characterised in that** the step of acquiring sensor input data further includes transmitting synthetic sensor data from a synthetic sensor data generator to the electronic system of the sensor unit, repeatedly performing a sequence of steps using a first feedback loop, the steps of the sequence including the steps of:
- generating the synthetic sensor data,
- transmitting the synthetic sensor data to a digital signal processing unit, and
- receiving image enhancements request and/or commands from the digital signal processing unit.

11. An automotive testing method according to claim 10, comprising the step of generating the synthetic sensor data to be transmitted to the electronic system of the sensor unit.

12. An automotive testing method according to claim 10 or 11,
wherein the step of transmitting synthetic sensor data to the electronic system of the sensor unit includes bypassing the sensor system of the sensor unit.

13. An automotive testing method according to claim 10, 11 or 12,
further comprising a step of transmitting sensor enhancements requests and/or sensor enhancements commands to the synthetic sensor data generator.

14. An automotive testing method according to claim 11,
wherein sensor enhancements requests and/or sensor enhancements commands are included for generating synthetic sensor data.

15. An automotive testing method according to any of the preceding claims 10-14,
further comprising the step of deactivating a sensor system of the camera unit.

16. An automotive testing method according to any of the preceding claims 10-15,
further including a step of calculating performance scores after performing the sequence of steps.

17. An automotive testing system according to claim 16,
further repeatedly performing a step of defining test automation parameters to define test cases, after performing the step of calculating performance scores using a second feedback loop.

18. A computer program product for automotive testing, the computer program product comprising computer readable code for causing a processor to perform the steps of:
- acquiring sensor input data, and
- processing said sensor input data,
wherein the step of acquiring sensor input data includes capturing sensor data using a sensor unit having a sensor system and an electronic system,
wherein the step of acquiring sensor input data further includes transmitting synthetic sensor data from a synthetic sensor data generator to the electronic system of the sensor unit, and
repeatedly performing a sequence of steps using a first feedback loop, the steps of the sequence including the steps of:
- generating the synthetic sensor data,
- transmitting the synthetic sensor data to a digital signal processing unit, and
- receiving image enhancements request and/or commands from the digital signal processing unit.

## Patentansprüche

1. Automobilprüfsystem (1), umfassend eine Datenverarbeitungseinheit (2), die mit einem Dateneingangsanschluss (11) zum Empfangen von Sensoreingangsdaten und einem Datenausgangsanschluss (12) zum Übertragen verarbeiteter Daten versehen ist,
ferner umfassend eine Datenerhebungseinheit (3), die Sensoreingangsdaten an die Datenverarbeitungseinheit weiterleitet, wobei die Datenerhebungseinheit eine Sensoreinheit (21) umfasst, die ein Sensorsystem (22) und ein elektronisches System (23) zum Erfassen von Sensordaten aufweist,
**dadurch gekennzeichnet, dass**
das Automobilprüfsystem ferner einen synthetischen Sensordatengenerator (4) umfasst, der synthetische Sensordaten an das dem elektronische System der Sensoreinheit überträgt, ferner umfassend einen Datenübertragungskanal (24), der den synthetischen Sensordatengenerator und das elektronische System der Sensoreinheit miteinander verbindet,
wobei das elektronische System der Sensoreinheit eine digitale Signalverarbeitungseinheit (26) umfasst,
wobei das Prüfsystem zum wiederholten Durchführen eine Abfolge von Schritten unter Verwendung einer ersten Rückkopplungsschleife angeordnet ist, wobei die Schritte der Abfolge die folgenden Schritte umfassen:
- Erzeugen der synthetischen Sensordaten,
- Übertragen der synthetischen Sensordaten an die digitale Signalverarbeitungseinheit, und
- Empfangen von einer Bildverstärkungsanforderung und/oder Befehlen von der digitalen Signalverarbeitungseinheit.

2. Automobilprüfsystem nach Anspruch 1,
wobei die durch die Sensoreinheit weitergeleiteten Sensoreingangsdaten auf den an das elektronische System der Sensoreinheit übertragenen synthetischen Sensordaten basieren.

3. Automobilprüfsystem nach einem der vorhergehenden Ansprüche,
wobei der Datenübertragungskanal zum Übertragen der synthetischen Sensordaten an die digitale Signalverarbeitungseinheit angeordnet ist.

4. Automobilprüfsystem nach einem der vorhergehenden Ansprüche,
wobei das elektronische System der Sensoreinheit eine Vorverarbeitungseinheit (25) zum Vorverarbeiten von durch das Sensorsystem generierten Sensorrohdaten umfasst.

5. Automobilprüfsystem nach einem der vorhergehenden Ansprüche,
wobei die Sensoreinheit eine Kameraeinheit ist,
wobei das Sensorsystem ein optisches System ist, und
wobei die Sensordaten Bilddaten sind.

6. Automobilprüfsystem nach Anspruch 6,
wobei die synthetischen Sensordaten RGB-Sensordaten und/oder andere Daten im sichtbaren oder nicht sichtbaren Spektrum umfassen.

7. Automobilprüfsystem nach einem der vorhergehenden Ansprüche,
wobei die synthetischen Sensordaten simulierte Infrarotsignale umfassen.

8. Automobilprüfsystem nach einem der vorhergehenden Ansprüche,
wobei die synthetischen Sensordaten simulierte Lasersignale, simulierte Infrarotsignale, simulierte Radarsignale, simulierte akustische Signale, simulierte Ultraschallsignale, simulierte Drucksignale und/oder simulierte elektronische Signale umfassen, die auf einem verdrahteten oder drahtlosen Weg empfangen werden und eine beliebige Art von gemessenen physikalischen Signalen darstellen, die mit automobilen Zuständen oder Parametern in Zusammenhang stehen.

9. Automobilprüfsystem nach einem der vorhergehenden Ansprüche,
ferner umfassend eine Steuereinheit zum Generieren von Steuerdaten basierend auf den durch die Verarbeitungseinheit übertragenen verarbeiteten Daten.

10. Automobilprüfverfahren, umfassend die folgenden Schritte:
- Erheben von Sensoreingangsdaten, und
- Verarbeiten der Sensoreingangsdaten,
wobei der Schritt des Erhebens von Sensoreingangsdaten Erfassen von Sensordaten unter Verwendung einer Sensoreinheit mit einem Sensorsystem und einem elektronischen System umfasst, **dadurch gekennzeichnet, dass** der Schritt des Erhebens von Sensoreingangsdaten ferner Übertragen synthetischer Sensordaten von einem synthetischen Sensordatengenerator an das elektronische System der Sensoreinheit umfasst,
wiederholtes Durchführen einer Abfolge von Schritten unter Verwendung einer ersten Rückkopplungsschleife, wobei die Schritte der Abfolge die folgenden Schritte umfassen:
- Erzeugen der synthetischen Sensordaten,
- Übertragen der synthetischen Sensordaten an die digitale Signalverarbeitungseinheit, und
- Empfangen von einer Bildverstärkungsanforderung und/oder Befehlen von der digitalen Signalverarbeitungseinheit.

11. Automobilprüfverfahren nach Anspruch 10,
umfassend den Schritt Generieren der an das elektronische System der Sensoreinheit zu übertragenden synthetischen Sensordaten.

12. Automobilprüfverfahren nach Anspruch 10 oder 11,
wobei der Schritt des Übertragens von synthetischen Sensordaten an das elektronische System der Sensoreinheit Umgehen des Sensorsystems der Sensoreinheit umfasst.

13. Automobilprüfverfahren nach Anspruch 10, 11 oder 12,
ferner umfassend einen Schritt Übertragen von Sensorverstärkungsanforderungen und/oder Sensorverstärkungsbefehlen an den synthetischen Sensordatengenerator.

14. Automobilprüfverfahren nach Anspruch 11,
wobei Sensorverstärkungsanforderungen und/oder Sensorverstärkungsbefehle zum Generieren synthetischer Sensordaten beinhaltet sind.

15. Automobilprüfverfahren nach einem der vorhergehenden Ansprüche 10-14,
ferner umfassend den Schritt Deaktivieren eines Sensorsystems der Kameraeinheit.

16. Automobilprüfverfahren nach einem der vorhergehenden Ansprüche 10-15,
ferner umfassend einen Schritt Berechnen von Leistungswerten nach Durchführen der Abfolge von Schritten.

17. Automobilprüfsystem nach Anspruch 16,
ferner wiederholtes Durchführen eines Schritts eines Definierens von Prüfungsautomationsparametern zum Definieren von Prüffällen nach Durchführen des Schritts des Berechnens von Leistungswerten unter Verwendung einer zweiten Rückkopplungsschleife.

18. Computerprogrammprodukt für eine Automobilprüfung, wobei das Computerprogrammprodukt computerlesbaren Code umfasst, um einen Prozessor zu veranlassen, die folgenden Schritte durchzuführen:
- Erheben von Sensoreingangsdaten, und
- Verarbeiten der Sensoreingangsdaten,
wobei der Schritt des Erhebens von Sensoreingangsdaten Erfassen von Sensordaten unter Verwendung einer Sensoreinheit mit einem Sensorsystem und einem elektronischen System umfasst,
wobei der Schritt des Erhebens von Sensoreingangsdaten ferner Übertragen synthetischer Sensordaten von einem synthetischen Sensordatengenerator an das elektronische System der Sensoreinheit umfasst, und
wiederholtes Durchführen einer Abfolge von Schritten unter Verwendung einer ersten Rückkopplungsschleife, wobei die Schritte der Abfolge die folgenden Schritte umfassen:
- Erzeugen der synthetischen Sensordaten,
- Übertragen der synthetischen Sensordaten an eine digitale Signalverarbeitungseinheit, und
- Empfangen von einer Bildverstärkungsanforderung und/oder Befehlen von der digitalen Signalverarbeitungseinheit.

## Revendications

1. Système (1) de test d'automobiles, comprenant une unité (2) de traitement de données, pourvue d'un accès (11) d'entrée de données pour recevoir des données d'entrée de capteur et d'un accès (12) de sortie de données pour transmettre des données traitées,
comprenant en outre une unité (3) d'acquisition de données envoyant des données d'entrée de capteur à l'unité de traitement de données, l'unité d'acquisition de données comprenant une unité (21) de capteur ayant un système (22) de capteur et un système (23) électronique pour acquérir des données de capteur, **caractérisé en ce que** le système de test d'automobiles comprend en outre un générateur (4) de données de capteur synthétiques, transmettant des données de capteur synthétiques au système électronique de l'unité de capteur,
comprenant en outre un canal (24) de transmission de données interconnectant le générateur de données de capteur synthétiques et le système électronique de l'unité de capteur
dans lequel le système électronique de l'unité de capteur comprend une unité (26) de traitement de signal numérique,
dans lequel le système de test est agencé pour effectuer de manière répétée une séquence de stades utilisant une première boucle de réaction, les stades de la séquence comprenant les stades de :
- production des données de capteur synthétiques
- transmission des données de capteur synthétiques à l'unité de traitement de signal numérique et
- réception d'une demande d'améliorations d'image et/ou d'instructions de l'unité de traitement de signal numérique.

2. Système de test d'automobiles suivant la revendication 1, dans lequel les données d'entrée de capteur envoyées par l'unité de capteur sont basées sur les données de capteur synthétiques transmises au système électronique de l'unité de capteur.

3. Système de test d'automobiles suivant l'une quelconque des revendications précédentes,
dans lequel le canal de transmission de données est agencé pour transmettre les données de capteur synthétiques à l'unité de traitement de signal numérique.

4. Système de test d'automobiles suivant l'une quelconque des revendications précédentes,
dans lequel le système électronique de l'unité de capteur comprend une unité (25) de pré-traitement pour pré-traiter des données de capteur brutes produites par le système de capteur.

5. Système de test d'automobiles suivant l'une quelconque des revendications précédentes,
dans lequel l'unité de capteur est une unité d'appareil photographique
dans lequel le système de capteur est un système optique et
dans lequel les données de capteur sont des données d'image.

6. Système de test d'automobiles suivant la revendication 5,
dans lequel les données de capteur synthétiques comprennent des données de capteur rouges, vertes, bleues et/ou d'autres données du spectre visible ou invisible.

7. Système de test d'automobiles suivant l'une quelconque des revendications précédentes,
dans lequel les données de capteur synthétiques comprennent des signaux infrarouges simulés.

8. Système de test d'automobiles suivant l'une quelconque des revendications précédentes,
dans lequel les données de capteur synthétiques comprennent des signaux lasers simulés, des signaux infrarouges simulés, des signaux radars simulés, des signaux acoustiques simulés, des signaux ultrasonores simulés, des signaux de pression simulés et/ou des signaux électroniques simulés reçus d'une manière sans fil ou avec fil représentant tout type de signaux physiques mesurés associés à des états ou paramètres d'automobile.

9. Système de test d'automobiles suivant l'une quelconque des revendications précédentes,
comprenant en outre une unité de commande pour produire des données de commande sur la base des données traitées transmises par l'unité de traitement.

10. Procédé de test d'automobiles, comprenant les stades de :
- acquisition de données d'entrée de capteur et
- traitement des données d'entrée de capteur,
dans lequel le stade d'acquisition de données d'entrée de capteur comprend acquérir des données de capteur en utilisant une unité de capteur ayant un système de capteur et un système électronique, **caractérisé en ce que**
le stade d'acquisition de données d'entrée de capteur comprend en outre la transmission de données de capteur synthétiques d'un générateur de données de capteur synthétiques au système électronique de l'unité de capteur,
le fait d'effectuer de manière répétée une séquence de stades utilisant une première boucle de réaction, les stades de la séquence comprenant les stades de :
- production des données de capteur synthétiques,
- transmission des données de capteur synthétiques à l'unité de traitement de signal numérique et
- réception d'une demande d'améliorations de l'image et/ou d'instructions de l'unité de traitement de signal numérique.

11. Procédé de test d'automobiles suivant la revendication 10, comprenant le stade de production des données de capteur synthétiques à transmettre au système électronique de l'unité de capteur.

12. Procédé de test d'automobiles suivant la revendication 10 ou 11, dans lequel le stade de capteur de données de capteur synthétiques au système électronique de l'unité de capteur comprend court-circuiter le système de capteur de l'unité de capteur.

13. Procédé de test d'automobiles suivant la revendication 10, 11 ou 12,
comprenant en outre un stade de transmission de demandes d'améliorations de capteur et/ou d'instructions d'amélioration de capteur au générateur de données de capteur synthétiques.

14. Procédé de test d'automobiles suivant la revendication 11, dans lesquels les demandes d'améliorations de capteur et/ou les instructions d'amélioration de capteur sont inclues pour produire des données de capteur synthétiques.

15. Procédé de test d'automobiles suivant l'une quelconque des revendications 10 à 14 précédentes,
comprenant en outre le stade de désactivation d'un système de capteur de l'unité d'appareil photographique.

16. Procédé de test d'automobiles suivant l'une quelconque des revendications 10 à 15 précédentes,
comprenant en outre un stade de calcul de scores de performance après avoir effectué la séquence de stades.

17. Procédé de test d'automobiles suivant la revendication 16,
comprenant en outre le fait d'effectuer de manière répétée un stade de définition de paramètres d'automation de test pour définir des cas de test, après avoir effectué le stade de calcul des scores de performance en utilisant une deuxième boucle à réaction.

18. Produit de programme d'ordinateur pour un test d'automobiles, le produit de programme d'ordinateur comprenant un code déchiffrable par ordinateur pour faire qu'un processeur effectue les stades de :
- acquérir des données d'entrée de capteur et
- traiter les données d'entrée de capteur,
- dans lequel le stade d'acquisition de données d'entrée de capteur comprend acquérir des données de capteur en utilisant une unité de capteur ayant un système de capteur et un système électronique, dans lequel le stade d'acquisition de données d'entrée de capteur comprend en outre la transmission de données de capteur synthétiques d'un générateur de données de capteur synthétiques au système électronique de l'unité de capteur et
le fait d'effectuer de manière répétée une séquence de stades en utilisant une première boucle de réaction, les stades de la séquence comprenant les stades de :
- production des données de capteur synthétiques,
- transmission des données de capteur synthétiques à une unité de traitement de signal numérique et
- réception de demandes d'améliorations d'images et/ou d'instructions de l'unité de traitement de signal numérique.
